**Europäisches Patentamt**

**European Patent Office**

**Office européen des brevets**

(19)

(11) Numéro de publication : **0 310 473 B1**

(12) # FASCICULE DE BREVET EUROPEEN

(45) Date de publication du fascicule du brevet :
04.03.92 Bulletin 92/10

(51) Int. Cl.⁵ : **B60T 8/44**

(21) Numéro de dépôt : **88402290.6**

(22) Date de dépôt : **12.09.88**

(54) **Circuit hydraulique de freinage pour véhicule automobile, à double circuit en croix et dispositif d'antiblocage des roues.**

(30) Priorité : **30.09.87 FR 8713501**

(43) Date de publication de la demande :
**05.04.89 Bulletin 89/14**

(45) Mention de la délivrance du brevet :
**04.03.92 Bulletin 92/10**

(84) Etats contractants désignés :
**DE ES FR GB IT**

(56) Documents cités :
**DE-A- 2 351 488**

(56) Documents cités :
**DE-A- 2 911 966**
**DE-A- 3 439 066**
**DE-A- 3 517 958**
**DE-A- 3 601 769**
**GB-A- 2 187 521**
**US-A- 3 973 806**

(73) Titulaire : **BENDIX EUROPE Services
Techniques S.A.
126 rue de Stalingrad
F-93700 Drancy (FR)**

(72) Inventeur : **Kervagoret, Gilbert Bendix France
126 Rue de Stalingrad
F-93700 Drancy (FR)**

EP 0 310 473 B1

## Description

La présente invention est relative à un circuit hydraulique de freinage pour véhicule automobile, à double circuit en croix et dispositif d'antiblocage de roues et, plus particulièrement, à un tel circuit dans lequel le dispositif d'antiblocage est conçu pour pouvoir se superposer simplement à un circuit hydraulique de freinage classique.

On connaît de EP-A-0.283.332 qui est compris dans l'état de la technique au sens de l'Article 54(3) CBE, un tel circuit comprenant un maître-cylindre actionné par un servo-frein commandé par une pédale, un frein associé à chaque roue du véhicule, une électrovalve pour fermer normalement le circuit de freinage et pour, sous la commande du dispositif d'antiblocage, détendre la pression dans le frein de roue en mettant celui-ci en communication avec des moyens de stockage du liquide de freinage du circuit. Ces moyens de stockage comprennent un premier accumulateur et une pompe connectée à la sortie "détente" de l'électrovalve, un deuxième accumulateur haute pression connecté entre la sortie de la pompe et un clapet anti-retour, la pompe étant mise en route par le dispositif de commande d'antiblocage en même temps que l'électrovalve. Du fait de sa configuration en double circuit en croix, l'ensemble compte ainsi quatre accumulateurs et deux pompes avec, pour corollaire, une fiabilité qui décroît avec le nombre de ces appareils et un encombrement qui croît avec ce même nombre.

La présente invention a donc pour but d'améliorer la fiabilité et l'encombrement d'un circuit de freinage à double circuit en croix et dispositif d'antiblocage des roues, celui-ci ne comprenant qu'une seule pompe directement reliée par le côté "aspiration" au réservoir du maître-cylindre pour fournir en permanence un débit maximal au circuit, contrairement à ce que l'on trouve dans les circuits qui ne peuvent débiter que ce que reçoivent les capacités ou accumulateurs pressurisés en provenance des électrovalves de détente, compte non-tenu des délais de réamorçage de la pompe.

La présente invention a, en particulier, pour but de réaliser un tel circuit comprenant un dispositif de sécurité et un régulateur de pression pour réguler les pressions dans le circuit autour de la valeur correspondant à la "position pédale" affichée par le conducteur au moment de l'intervention du dispositif d'antiblocage.

La présente invention a aussi pour but de réaliser un tel dispositif qui ne compte qu'une capacité remplaçant l'ensemble des capacités ou accumulateurs installés, par exemple, dans le circuit de la demande de brevet français précitée.

La présente invention a encore pour but de réaliser un tel circuit conçu pour être associé à un dispositif d'antiblocage du type dans lequel les pressions du fluide de freinage dans les moteurs de freins des roues avant sont commandées séparément alors que la roue arrière de plus basse adhérence commande l'établissement d'une même pression de fluide dans les moteurs de freins des roues arrière.

On atteint ces buts de l'invention, ainsi que d'autres qui apparaîtront dans la suite, avec un circuit hydraulique de freinage pour véhicule automobile, à double circuit primaire et secondaire en croix, d'alimentation des moteurs de freins de roues et maître-cylindre tandem à réservoir, ce circuit étant équipé un dispositif d'antiblocage de roues du type dans lequel les pressions d'un fluide de freinage dans les moteurs de frein des roues avant sont commandées séparément alors que la roue arrière de plus basse adhérence commande l'établissement d'une même pression de fluide dans les moteurs de frein des roues arrière, ces pressions étant gouvernées par une électrovalve d'admission-détente associée respectivement à chacune des roues avant et à l'essieu arrière, chaque électrovalve comprenant un clapet de détente, le circuit étant réalimenté en période d'antiblocage par une pompe unique reliée directement du côté aspiration au réservoir du maître-cylindre tandem.

Le circuit hydraulique comprend en outre un dispositif de sécurité reliant hydrauliquement les clapets de détente des électrovalves et le réservoir par l'intermédiaire d'un moyen de clapet commandé par la pression de refoulement de la pompe quand la pression du fluide refoulé par la pompe atteint un niveau prédéterminé.

Le document US-A-3 973 806 décrit un tel circuit hydraulique comprenant un dispositif de sécurité bloquant la communication entre les électrovalves et le réservoir en cas de réduction de la pression dans le circuit de freinage.

Selon la présente invention, le dispositif de sécurité comprend une capacité variable reliée aux clapets de détente des électrovalves et portant le moyen de clapet, un piston commandé par la pression du fluide côté refoulement de la pompe, pour provoquer l'ouverture du moyen de clapet quand cette pression atteint le niveau prédéterminé, des deuxième et troisième moyens de clapet anti-retour respectivement, assurant en outre la réalimentation des circuits primaire et secondaire respectivement par le fluide débité par la pompe.

Le circuit suivant l'invention comprend encore un régulateur de pression installé dans le circuit primaire et sensible, à travers le dispositif de sécurité, à la pression régnant dans le circuit secondaire pour assurer la régulation des pressions dans les circuits primaire et secondaire, au niveau du maître-cylindre, au voisinage de la valeur de la pression exercée sur une pédale de commande du maître-cylindre par le conducteur du véhicule, au moment où commence une phase de fonctionnement du dispositif d'antiblocage.

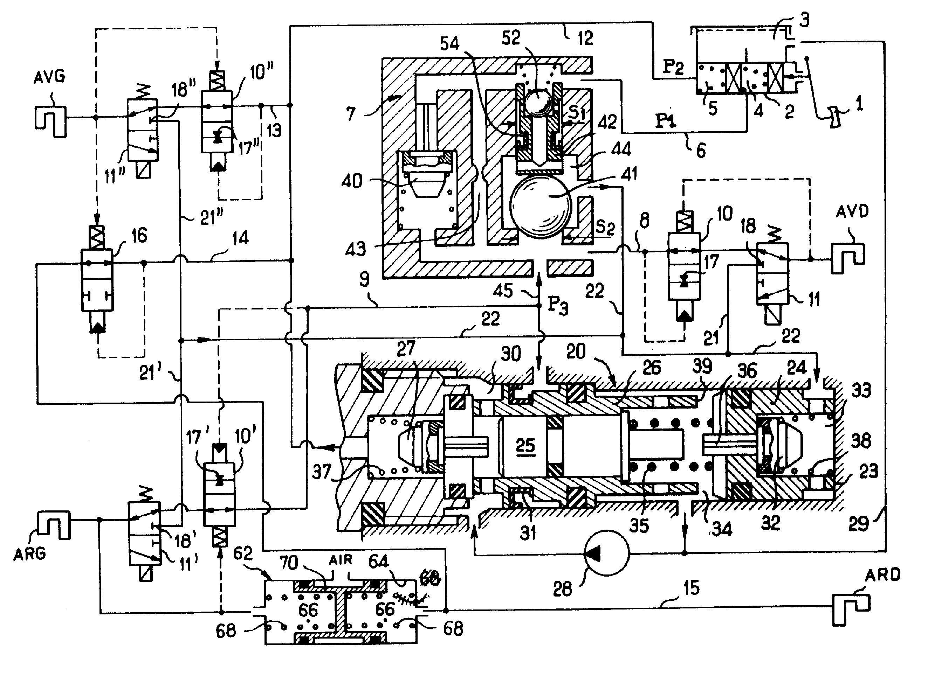

Au dessin annexé donné seulement à titre d'exemple, la figure unique représente schématiquement le circuit de freinage à dispositif d'antiblocage suivant l'invention.

On se réfère au dessin où il apparaît que le circuit de freinage suivant l'invention comprend classiquement deux circuits en croix, primaire et secondaire, commandant respectivement des moteurs de frein AVD et ARG associés aux roues avant droite et arrière gauche d'une part, et des moteurs de frein AVG et ARD as sociés respectivement aux roues avant gauche et arrière droite d'autre part. Le circuit primaire et le circuit secondaire sont mis en pression lors de l'actionnement d'une pédale de frein (1) agissant, éventuellement par l'intermédiaire d'un servofrein (non représenté), sur un maître-cylindre tandem (2) associé à un réservoir de liquide de freinage (3). Les circuits primaire et secondaire sont respectivement reliés à des chambres (4) et (5) du maître-cylindre tandem (2). Suivant l'invention, le circuit primaire est connecté par une ligne (6) à un régulateur de pression (7) que l'on décrira plus loin en détail. Des lignes (8) et (9) raccordent le régulateur de pression (7) aux moteurs de frein AVD et ARG respectivement, à travers des soupapes pilotées 10, 10′ et des électrovalves d'admission-détente 11, 11′, respectivement. Le circuit secondaire est relié au moteur de frein AVG par des lignes (12), (13), à travers une soupape pilotée (10″) et une électrovalve d'admission-détente (11″). Ce circuit secondaire est relié par ailleurs au moteur de frein ARD par des lignes (14) et (15), à travers une soupape pilotée (16) dont on décrira le rôle en détail dans la suite. Les soupapes 10, 10′, 10″ et les électrovalves 11, 11′, 11″ font partie d'un dispositif d'antiblocage de roues commandé par un calculateur (non représenté). Chacune des soupapes 10, 10′, 10″ occupe l'une ou l'autre des deux positions, de manière à être passante dans l'une d'elle et à installer une restriction 17, 17′, 17″ dans la ligne qu'elle contrôle, respectivement, dans l'autre position. Le fonctionnement de ces soupapes commandées par des pressions amont/aval dans la ligne est classique dans les dispositifs d'antiblocage de ce type et ne sera pas décrit en plus de détail.

Les électrovalves 11, 11′ et 11″ sont des électrovalves d'admission-détente à trois voies et deux positions classiques, commandées par le calculateur de dispositif d'antiblocage. Leur fonctionnement est bien connu, et on notera seulement que ces électrovalves comprennent un clapet de détente 18, 18′, 18″ respectivement, sujet à des fuites accidentelles comme il est bien connu dans la technique. Ainsi qu'on le verra dans la suite, le dispositif de sécurité incorporé au circuit suivant l'invention pallie cet inconvénient.

En freinage normal, le conducteur du véhicule agit classiquement sur les moteurs de frein par un effort sur la pédale (1) converti en pression de fluide par le maître-cylindre (2) et transmise dans le circuits primaire et secondaire par les lignes (6), (9), (12), (13), (14) et (15) aux moteurs de frein, alors que les soupapes pilotées et les électrovalves se trouvent dans les positions d'admission représentées à la figure.

A l'apparition d'une tendance au blocage d'une des roues de véhicule, le calculateur du dispositif d'antiblocage commande le passage de l'électrovalve correspondante en position "détente". Dans cette position, le clapet de détente 18, 18′, ou 18″ de l'électrovalve concernée est alors raccordé à un dispositif de sécurité (20) formant partie du circuit suivant l'invention, par des lignes 21, 21′, 21″ qui relient respectivement les clapets 18, 18′, et 18″ à une ligne collectrice (22) connectée au dispositif (20).

Le dispositif de sécurité (20) comprend essentiellement, installés co-axialement dans un alésage étagé (23), un piston (24) délimitant une capacité variable et un piston (25) coulissant dans un fourreau fixe (26) entre cette capacité et un clapet anti-retour (27). Suivant l'invention, une pompe unique (28) est raccordée, côté admission, par une ligne (29) au réservoir (3) du maître-cylindre tandem (2). Du côté refoulement, la pompe est raccordée à une chambre (30) du dispositif de sécurité, située entre le piston (25) et le clapet (27). Le liquide de freinage refoulé dans la chambre (30) par la pompe (29) passe dans le circuit secondaire par l'intermédiaire du clapet (27) qui est taré et, d'autre part, dans la ligne (9) du circuit primaire et dans le régulateur de pression (7) que l'on décrira en détail dans la suite, par l'intermédiaire d'un clapet anti-retour (31) constitué par une coupelle d'étanchéité montée sur le fourreau (26). Cette coupelle d'étanchéité joue le rôle d'un clapet anti-retour pratiquement non taré et autorise le passage du liquide de freinage de la chambre (30) vers la ligne (9) et le régulateur (7), par dessus le bord extérieur de la coupelle, en interdisant tout passage de fluide dans l'autre sens, comme il est bien connu.

Le dispositif de sécurité (20) comprend encore un moyen de clapet (32) séparant une chambre (33) de la capacité variable (24) d'une chambre (34) reliée au réservoir (3) par la ligne (29) elle-même reliée au côté aspiration de la pompe (28). Un ressort (35) installé dans la chambre (34) charge le piston (25) et le piston (24) à l'écart l'un de l'autre. Les clapets (27) et (32) sont tarés par des ressorts (37) et (38) respectivement. La capacité (24) forme ainsi avec le ressort (35) une petite capacité élastique de faible volume, limitée par sa venue en butée avec une extrémité (39) du fourreau (26). Cette capacité, de l'ordre du centimètre cube, permet de recueillir toutes les fuites éventuelles collectées par la ligne (22) et de les y conserver si le clapet (32) n'est pas sollicité vers sa position d'ouverture, pour protéger ainsi le circuit de freinage.

On décrira maintenant le fonctionnement du dispositif de sécurité suivant l'invention. A la détection d'une tendance au blocage d'une roue du véhicule, le dispositif d'antiblocage déclenche la mise en route de la pompe (28), cette mise en route à pour effet d'élever la pression du liquide de freinage dans la chambre (30) et de provoquer ainsi le déplacement du piston (25) qui vient alors repousser la tige de commande (36) du clapet (32) en ouvrant celui-ci. La chambre (33) de la capacité est alors mise en communication avec le réservoir (3) par l'intermédiaire de la chambre (34) et de la ligne (29). Si, alors, cette action du dispositif d'antiblocage ne provoque pas la mise en route de la pompe, du fait par exemple d'un fil d'alimentation électrique coupé ou débranché, il y a gavage de la chambre (33) sans conséquence sur la qualité du freinage normal. Par ailleurs une pompe en mauvais état ne peut vaincre la tare du ressort (35) à laquelle vient s'ajouter l'action de la pression du fluide accumulée dans la chambre (33) sur le clapet (32).

Le débit de la pompe se divise en deux parties au niveau de la chambre (30) pour alimenter le circuit primaire à travers la coupelle (31) qui sert de clapet anti-retour et le circuit secondaire à travers le clapet (27). La pression de fuite de la coupelle (31) est pratiquement nulle alors que, suivant l'invention, la pression d'ouverture du clapet (27), de l'ordre de quelques bars, est inférieure à la pression d'ouverture du clapet (32). Il en résulte que toute défaillance du circuit primaire ou du circuit secondaire limite la pression de refoulement de la pompe (28) à la valeur de tarage du clapet (27) ou de la pression de fuite de la coupelle (31). Il en résulte que le clapet (32) reste fermé et protège ainsi le circuit non défaillant contre les fuites des clapets de détente.

La présence d'un débit continu à la sortie de la pompe (28) en phase d'antiblocage a tendance à renvoyer la pédale (1) sous pression vers sa position haute. Il est donc nécessaire de prévoir un dispositif permettant de réguler les pressions autour de la valeur correspondant à la "position pédale" affichée au moment de l'intervention du dispositif d'antiblocage, pour éviter une "sensation pédale" désagréable pour le conducteur. C'est le rôle du régulateur de pression (7) incorporé au dispositif suivant l'invention.

Ce régulateur comprend essentiellement un clapet anti-retour (40) et un clapet à bille (41) limiteur de pression, associé à un poussoir (42) mobile dans le corps du régulateur (7). Une restriction (43) court-circuite le clapet (40). La bille due clapet (41) est placée dans une chambre (44) reliée d'une part à la ligne (22) et d'autre part, à travers le siège de la bille, à la ligne (8). Le clapet à bille (40) autorise un passage du fluide de la ligne (6) vers la ligne (8), l'amont du clapet (40) étant connecté par la ligne (6) à la chambre (4) du maître-cylindre (2), dans le circuit primaire. L'aval du clapet (40) est connecté par une ligne (45) d'une part à la ligne (9) et, d'autre part, à l'aval de la coupelle d'étanchéité (31) portée par le fourreau (26) du piston (25).

En phase de fonctionnement en antiblocage, le débit de la pompe (28) vers le circuit primaire du maître-cylindre est arrêté par le clapet (40). Seule une petite quantité déterminée est autorisée à passer par la restriction (44) qui sert à limiter les enfoncements de la pédale. Le surplus du débit de la pompe non utilisé est évacué vers le réservoir via la canalisation (22) et les chambres (44) et (33), à travers le clapet limiteur de pression (41).

Si P1 est la pression dans le circuit primaire à la sortie du maître-cylindre (2), P3 étant la pression régulée en (45) par le clapet limiteur de pression (41), on a :

$$P3 \# P1 \times \frac{S1}{S2},$$ avec le signe # signifiant "peu différent de", S1 représentant la section du poussoir (42), S2 représentant la section du siège du clapet limiteur de pression (41), S1 étant légèrement supérieure à S2.

Pour que le système demeure stable, il faut que la tare $\Delta P2$ du clapet (27) soit telle que :
$$\Delta P2 \geqq P3 - P2,$$
pour éviter que la remontée de la pédale n'ait lieu par l'intermédiaire du circuit secondaire (par exemple P2 = P3 > P1).

Le poussoir (42) supporte en outre un petit clapet (52) faiblement taré dont le rôle est :

a) de vider le circuit primaire au défreinage via le clapet (41),

b) d'éviter de conserver une pression résiduelle dans la chambre (33).

La présence d'une coupelle d'étanchéité (54) sur le poussoir (42) suffit à garantir une pression pratiquement nulle dans la chambre (44).

On peut envisager sur des circuits de freinage à faible ou moyen déplacement de liquide, de substituer la coupelle (54) au clapet (52) pour simplifier la structure du régulateur de pression.

On décrit dans la suite le fonctionnement des étages électro-hydrauliques du circuit suivant l'invention. Comme on l'a vu plus haut, chacune des roues avant gauche, avant droite et arrière gauche est associée à une électrovalve d'admission-détente 11, 11′, 11″, et à une soupape pilotée 10, 10′, 10″ d'un modèle connu, dont le rôle est de fermer le passage direct du maître-cylindre vers le frein à travers l'électrovalve associée et de remplacer de passage direct par une restriction 17, 17′, 17″ qui tempère la remontée en pression dans le frein.

Chaque soupape 10, 10′, 10″ se ferme dès la première détente apparaissant sur l'électrovalve qui lui est associée. La fermeture persiste jusqu'a la fin du freinage. Comme on l'a vu plus haut, une quatrième soupape pilotée (16) se trouve placée en parallèle sur la commande de la roue avant gauche. Le rôle de cette soupape est d'isoler la roue arrière droite de la roue avant gauche ainsi que du maître-cylindre.

Cet isolement est obtenu soit par l'excitation de l'électrovalve 11″ associée à la roue avant gauche, si une tendance au blocage de cette dernière est relevée par le dispositif d'antiblocage, soit par une brève excitation de cette même électrovalve si la tendance au blocage est détectée sur la roue avant droite. La durée de cette excitation, dans ce cas, est fixée de telle manière que seule la soupape (16) se ferme durant l'impulsion. On parvient à ce résultat en tarant le ressort de la soupape (16) à une valeur inférieure à celle des soupapes 10, 10′, 10″.

En outre, la commande de fermeture de la soupape (16) en présence d'une détection de blocage sur la roue avant droite n'apparaît qu'a la première détente sur cette dernière.

Dès la fermeture de la soupape (16), la roue arrière droite se trouve contrôlée par la roue arrière gauche à travers un organe d'équilibrage (62) des pressions dans les moteurs de frein des roues arrière. Cet organe est constitué par un cylindre (64) divisé en deux volumes sensiblement égaux (66) par un piston à double étanchéité (70) et mise à l'air libre, maintenu en position médiane par deux ressorts identiques précontraints (68).

On comprend qu'une tendance au blocage des roues arrière gauche ou arrière droite qui entraîne l'excitation de l'électrovalve 11′ associée à la roue arrière gauche, provoque une chute de pression sensiblement identique sur les deux moteurs des frein des roues arrière. Il en est de même à la réalimentation. Les volumes (66) sont déterminés de telle manière qu'une fermeture fugitive de la soupape (16) n'entraîne pas une perte d'efficacité sur l'essieu arrière (par exemple lors d'une transition fugitive basse adhérence/haute adhérence sur la route). La pompe (28), en réalimentant la chambre (66) côté roue arrière gauche regonfle en même temps le frein arrière droit par compression du volume (66) qui lui est associé.

Les soupapes 10, 10′ et 10″, du fait de leurs emplacements dans le circuit suivant l'invention, n'ont aucune influence sur les vitesses de détente des pressions et n'interviennent qu'au niveau de la durée de réalimentation des freins à travers les restrictions 17, 17′, 17″ dont la valeur doit être optimisée.

Ainsi, grâce à l'invention, on dispose d'un circuit de freinage antibloquant de fiabilité et de compacité améliorées par l'utilisation d'une seule pompe et d'une seule capacité. La sécurité du circuit est assurée tant du point de vue d'une éventuelle défaillance de la pompe que du fait de fuites au niveau des clapets de détente des électrovalves. En outre, le régulateur de pression introduit dans le circuit améliore le confort du conducteur en supprimant des réactions sur la pédale de frein.

On notera encore que le circuit en croix suivant l'invention permet d'utiliser un dispositif d'antiblocage de roue à quatre capteurs de vitesse fonctionnant en configuration "roues avant indépendantes" et commande des moteurs de frein arrière par celui associé à la roue de plus basse adhérence, ce dispositif ne comprenant qui trois électrovalves à trois voies et deux positions. Cette solution est donc particulièrement économique. En outre, techniquement, l'utilisation d'une seule pompe reliée directement au réservoir du maître-cylindre tandem permet, de manière avantageuse, d'obtenir un débit continu et une référence de pression nulle à la détente. Il faut noter encore que le circuit suivant l'invention retient toutes le caractéristiques des circuits à dispositif d'antiblocage conçus pour être superposés simplement à un circuit hydraulique de freinage classique.

## Revendications

1. Circuit hydraulique de freinage pour véhicule automobile, à double circuit primaire et secondaire en croix d'alimentation des moteurs de frein de roues et maître-cylindre tandem à réservoir, ce circuit étant équipé d'un dispositif d'antiblocage de roues du type dans lequel les pressions d'un fluide de freinage dans les moteurs de freins des roues avant sont commandées séparément alors que la roue arrière de plus basse adhérence commande l'établissement d'une même pression de fluide dans les moteurs de frein des roues arrière, ces pressions étant gouvernées par une électrovalve d'admission-détente (11) associée respectivement à chacune des roues avant et à l'essieu arrière, chaque électrovalve comprenant un clapet de détente (18), le circuit étant ré-alimenté en période d'antiblocage par une pompe unique (28) reliée directement du côté aspiration au réservoir (3) du maître-cylindre tandem (2), le dit circuit comprenant en outre un dispositif de sécurité (20) reliant hydrauliquement les dits clapets de détente (18) des électrovalves (11) et le réservoir (3) par l'intermédiaire d'un moyen de clapet (32) commandé par la pression de refoulement de la pompe (28) quand la pression du fluide refoulé par la pompe (28) atteint un niveau prédéterminé, caractérisé en ce que le dispositif de sécurité comprend une capacité variable (24) reliée aux dits clapets de détente (18) des électrovalves (11) et portant le dit moyen de clapet (32), un piston (25) commandé par la pression du fluide côté refoulement de la pompe, pour provoquer l'ouverture du dit moyen de clapet (32) quand cette pression atteint le dit niveau prédéterminé, des deuxième et troisième moyens de clapet anti-retour (31, 27) respectivement, assurant en outre la réalimentation des circuits primaire et secondaire respectivement par le fluide débité par la pompe.

2. Circuit selon la revendication 1, caractérisé en ce que les dits moyens de clapet (32, 31, 27), le piston (25) et la capacité variable (24) sont agencés coaxialement dans un même alésage, le piston (25) et la capacité (24) étant chargés à l'écart l'un de l'autre par un ressort (35) placé dans une chambre (34) de l'alésage qui communique avec le côté aspiration de la pompe (28) et le réservoir (3) du maître-cylindre tandem (2).

3. Circuit selon la revendication 1 ou 2, caractérisé en ce que le piston (25) est mobile dans un fourreau (26) fixe placé dans l'alésage, ce fourreau (26) portant une coupelle d'étanchéité (31) constituant le deuxième moyen de clapet anti-retour.

4. Circuit selon l'une quelconque des revendications précédentes, caractérisé en ce que les deuxième et troisième moyens de clapet (31, 27) sont faiblement tarés à quelques bars alors que l'ouverture du moyen de clapet (32) n'intervient que pour une pression sensiblement supérieure correspondant au dit niveau prédéterminé.

5. Circuit selon l'une quelconque des revendications précédentes, caractérisé en ce qu'il comprend en outre un régulateur de pression (7) installé dans le circuit primaire (6) et sensible, à travers le dispositif de sécurité (20), à la pression (P2) régnant dans le circuit secondaire pour assurer la régulation des pressions dans les circuits primaire et secondaire, au niveau du maître-cylindre, au voisinage de la pression établie par le maître-cylindre par l'effort exercé sur une pédale de commande (1) du maître-cylindre au moment où commence une phase de fonctionnement du dispositif d'antiblocage.

6. Circuit selon la revendication 5, caractérisé en ce que le régulateur de pression (7) comprend un quatrième moyen de clapet (41) qui, en phase d'antiblocage, recycle une partie du fluide débité par la pompe vers le réservoir (3) à travers une chambre (44) commandée par ce quatrième moyen de clapet (41) et une ligne (22) raccordant cette chambre à la capacité variable (24).

7. Circuit selon la revendication 6, caractérisé en ce que la tare Δ P2 du troisième moyen de clapet (38) est telle que

$$\Delta P2 \geqq P3 - P2$$

où P2 est la pression dans le circuit secondaire et P3 la pression régulée par le régulateur de pression à une valeur légèrement supérieure à la pression P1 dans le circuit primaire.

8. Circuit selon l'une quelconque des revendications 5 à 7, caractérisé en ce que le régulateur de pression comprend en outre une restriction (43) pour autoriser une petite quantité du fluide de freinage à remonter dans le maître-cylindre par le circuit primaire de manière à limiter l'enfoncement de la pédale associée au maître-cylindre pendant les phases d'antiblocage.

9. Circuit selon la revendication 8, caractérisé en ce qu'un clapet anti-retour (40) est placé en parallèle sur la restriction (43) pour empêcher un débit de la pompe dans le circuit primaire par ce clapet.

10. Circuit selon l'une quelconque des revendications 5 à 9, caractérisé en ce que le moyen de clapet (41) est associé à un poussoir (42) qui supporte en outre un clapet (52), plus petit, faiblement taré à quelques bars pour vider le circuit primaire au dé-freinage via le clapet (41) et à supprimer alors toute pression résiduelle dans les chambres (44) du régulateur et (33) de la capacité variable, respectivement.

11. Circuit selon l'une quelconque des revendications 5 à 9, caractérisé en ce que le clapet (41) est associé à un poussoir (42) qui supporte une coupelle d'étanchéité (54) orientée de manière à autoriser le vidage du circuit primaire au dé-freinage via le clapet (41) et à supprimer alors toute pression résiduelle dans les chambres (44) du régulateur et (33) de la capacité variable, respectivement.

12. Circuit selon l'une quelconque des revendications précédentes, caractérisé en ce qu'il comprend une soupape pilotée (16) placée en parallèle sur la soupape à restriction et l'électrovalve associée au moteur de frein de la roue avant du circuit secondaire pour isoler le moteur de frein associé à la roue arrière du même circuit vis-à-vis de la roue avant et du maître-cylindre, en cas d'action du dispositif d'antiblocage sur une des roues avant, et un organe d'équilibrage (62) des pressions dans les moteurs de frein des roues arrière, installé entre ces moteurs de frein.

13. Circuit selon la revendication 12, caractérisé en ce que le ressort de la soupape pilotée (16) est taré à une valeur inférieure à celle des ressorts des soupapes à restriction (10, 10′, 10″), associées aux électrovalves d'isolement-détente (11, 11′, 11″), respectivement.

14. Circuit selon l'une quelconque des revendications 12 et 13, caractérisé en ce que l'organe d'équilibrage (62) des pressions prend la forme d'un cylindre (64) divisé en deux volumes sensiblement égaux par un piston (70) maintenu en position médiane par deux ressorts identiques précontraints (68), chacun de ces deux volumes étant raccordé hydrauliquement aux moteurs de frein associés aux roues arrière droite et gauche, respectivement.

15. Circuit selon la revendication 14, caractérisé en ce que le piston est à double étanchéité et mise à l'air libre intermédiaire.

**Claims**

1. Hydraulic brake circuit for motor vehicle, having a dual primary and secondary circuit in the form of a cross for supplying the wheel brake motors and a tandem master cylinder with reservoir, this circuit being provided with a wheel anti-lock device of the type in which the pressures of a brake fluid in the front wheel brake motors are controlled separately, while the back wheel having the lowest resistance to skid controls the setting of the same pressure of fluid in the back wheel brake motors, these pressures being governed by an admission-release electrovalve (11) associated respectively with each of the front wheels and with the rear axle, each electrovalve comprising a release valve (18), the circuit being resupplied in the anti-lock period by a single pump (28) connected directly on the suction side to the reservoir (3) of the tandem master cylinder (2), the said circuit furthermore comprising a safety device (20) which hydraulically connects the said release valves (18) of the electrovalves (11) and the reservoir (3) by means of a valve means (32) controlled by the delivery pressure of the pump (28) when the pressure of the fluid which is delivered by the pump (28) reaches a predetermined level, characterized in that the safety device comprises a variable capacity (24) which is connected to the said release valves (18) of the electrovalves (11) and which carries the said valve means (32), a piston (25) controlled by the pressure of the fluid on the delivery side of the pump to cause the said valve means (32) to open when this pressure reaches the said predetermined level, second and third non-return valve means, (31, 27) respectively, furthermore ensuring that the primary and secondary circuits are respectively resupplied by the fluid delivered by the pump.

2. Circuit according to Claim 1, characterized in that the said valve means (32, 31, 27), the piston (25) and the variable capacity (24) are arranged coaxially in the same bore the piston (25) and the capacity (24) being loaded to be apart from one another by a spring (35) placed in a chamber (34) of the bore which communicates with the suction side of the pump (28) and the reservoir (3) of the tandem master cylinder (2).

3. Circuit according to Claim 1 or 2, characterized in that the piston (25) is movable in a stationary sleeve (26) placed in the bore, this sleeve (26) carrying a sealing collar (31) constituting the second non-return valve means.

4. Circuit according to any one of the preceding claims, characterized in that the second and third valve means (31, 27) are calibrated to only a few bars while the opening of the valve means (32) is only actuated at a substantially higher pressure corresponding to the said predetermined level.

5. Circuit according to any one of the preceding claims, characterized in that it furthermore comprises a pressure regulator (7) which is installed in the primary circuit (6) and is sensitive, by way of the safety device (20), to the pressure (P2) prevailing in the secondary circuit, to ensure regulation of the pressures in the primary and secondary circuits, at the location of the master cylinder, in the vicinity of the pressure established by the master cylinder by the force exerted on a pedal (1) controlling the master cylinder at the moment when a phase of operation of the anti-lock device commences.

6. Circuit according to Claim 5, characterized in that the pressure regulator (7) comprises a fourth valve means (41) which, in the anti-lock phase, recycles part of the fluid delivered by the pump to the reservoir (3) by way of a chamber (44) controlled by this fourth valve means (41) and a line (22) connecting this chamber to the variable capacity (24).

7. Circuit according to Claim 6, characterized in that the calibration ΔP2 of the third valve means (38) is such that

$$\Delta P2 \geqq P3\text{-}P2$$

where P2 is the pressure in the secondary circuit and P3 is the pressure regulated by the pressure regulator at a value slightly greater than the pressure P1 in the primary circuit.

8. Circuit according to any one of Claims 5 to 7, characterized in that the pressure regulator furthermore comprises a narrow section (43) to allow a small quantity of brake fluid to rise into the master cylinder again by means of the primary circuit such that it limits depression of the pedal connected to the master cylinder during the anti-lock phases.

9. Circuit according to Claim 8, characterized in that a non-return valve (4) is placed in parallel with the narrow section (43) to prevent the pump delivering to the primary circuit by means of this valve.

10. Circuit according to any one of Claims 5 to 9, characterized in that the valve means (41) is connected to a thruster (42) which furthermore supports a valve (52) which is smaller and calibrated to only a few bars, to empty the primary circuit on release of braking by way of the valve (41) and thus to eliminate any residual pressure in the chamber (44) of the regulator and the chamber (33) of the variable capacity respectively.

11. Circuit according to any one of Claims 5 to 9, characterized in that the valve (41) is associated with a thruster (42) which supports a sealing collar (54) oriented such that it allows the primary circuit to be emptied on release of braking by way of the valve (41) and thus to eliminate any residual pressure in the chamber (44) of the regulator and the chamber (33) of the variable capacity respectively.

12. Circuit according to any one of the preceding claims, characterized in that it comprises a pilot-operated valve (16) placed in parallel with the restriction valve and the electrovalve connected to the front wheel brake motor of the secondary circuit to isolate the brake motor associated with the rear wheel of the same circuit as regards the front wheel and the master cylinder in the case where the anti-lock device acts on one of the front wheels, and an element (62) for balancing the pressures in the back wheel brake motors which is installed between these brake motors.

13. Circuit according to Claim 12, characterized in that the spring of the pilot-operated valve (16) is calibrated to a valve below that of the springs of the restriction valves (10, 10′, 10″) connected to the isolation-release electrovalves (11, 11′, 11″) respectively.

14. Circuit according to either of Claims 12 and 13, characterized in that the element (62) for balancing pressures is in the form of a cylinder (64) divided into two substantially equal spaces by a piston (70) held in the central position by two identical pre-stressed springs (68), each of these two spaces being hydraulically connected to the brake motors associated with the right and left back wheels respectively.

15. Circuit according to Claim 14, characterized in that the piston is double-sealed and is in contact with the intermediate open air.

## Patentansprüche

1. Hydraulikbremskreis für Kraftfahrzeug, mit einem überkreuzten Primär- und Sekundär-Doppelkreis für die Versorgung der Bremsmotoren der Räder und einem Tandem-Hauptzylinder mit Behälter, wobei dieser Kreis mit einer Rad-Antiblockiereinrichtung einer Bauart ausgerüstet ist, in der die Drücke eines Bremsfluids in den Bremsmotoren der Vorderräder getrennt gesteuert werden, während das Hinterrad mit der niedrigsten Haftung den Aufbau eines gleichen Fluiddrucks in den Bremsmotoren der Hinterräder steuert, wobei diese Drücke von einem jeweiligen, jedem der Vorderräder bzw. der Hinterachse zugeordneten Beaufschlagungs-/Entlastungs-Elektroventil (11) gesteuert werden, wobei jedes Elektroventil ein Entlastungsventil (18) aufweist, wobei der Kreis mittels einer einzigen Pumpe (28), die mit der Ansaugseite direkt mit dem Behälter (3) des Tandem-Hauptzylinders (2) verbunden ist, im Takt der Antiblockierperiode neu versorgt wird, wobei der Kreis außerdem eine Sicherheitseinrichtung (20) aufweist, die die Entlastungs-Ventile (18) hydraulisch über ein dazwischengeschaltetes, vom Förderdruck der Pumpe (28) gesteuertes Ventilmittel (32) mit dem Elektroventilen (11) und dem Behälter (3) verbindet, wenn der von der Pumpe (28) geförderte Fluiddruck ein vorgegebenes Niveau annimmt, dadurch gekennzeichnet, daß die Sicherheitsvorrichtung ein veränderliches Volumen (24), das mit den Entlastungsventilen (18) der Elektroventile (11) verbunden ist und das genannte Ventilmittel (32) umfaßt, einen Kolben (25), der vom förderseitigen Fluiddruck der Pumpe gesteuert wird, um die Öffnung des Ventilmittels (32) hervorzurufen, wenn dieser Druck das vorgegebene Niveau annimmt, und ein zweites bzw. ein drittes Rückschlagventilmittel (31, 27), die außerdem die Neuversorgung der Primär- bzw. Sekundär-Kreise mit dem von der Pumpe geförderten Fluid gewährleisten, aufweist.

2. Kreis gemäß Anspruch 1, dadurch gekennzeichnet, daß die Ventilnmittel (32, 31, 27), der Kolben (25) und das veränderliche Volumen (24) in derselben Bohrung koaxial angeordnet sind, wobei der Kolben (25) und das Volumen (24) in gegenseitigem Abstand durch eine Feder (35) belastet werden, die in einer Kammer (34) der Bohrung angeordnet ist, welche mit der Ansaugseite der Pumpe (28) und mit dem Behälter (3) des Tandem-Hauptzylinders (2) in Verbindung steht.

3. Kreis gemäß Anspruch 1 oder 2, dadurch gekennzeichnet, daß der Kolben (25) in einer in der Bohrung angeordneten festen Hülse (26) beweglich ist, wobei diese Hülse (26) einen Dichtungskragen (31) trägt, die das zweite Rückschlagventilmittel bildet.

4. Kreis gemäß einem der vorangehenden Ansprüche, dadurch gekennzeichnet, daß das zweite und das dritte Ventilmittel (31, 27) mit einigen Bar schwach austariert sind, während sich die Öffnung des Ventilmittels (32) nur bei einem Druck auswirkt, der im wesentlichen höher als das entsprechende vorgegebene Niveau ist.

5. Kreis gemäß einem der vorangehenden Ansprüche, dadurch gekennzeichnet, daß er außerdem einen Druckregler (7) aufweist, der im Primärkreis (6) eingebaut ist und durch die Sicherheitseinrichtung (20) hindurch auf den im Sekundärkreis herrschenden Druck (P2) anspricht, um die Druckregelung im Primärkreis und im Sekundärkreis auf Höhe des Hauptzylinders in der Umgebung desjenigen Drucks zu gewährleisten, der vom Hauptzylinder durch die von einem Steuerpedal (1) des Hauptzylinders ausgeübte Wirkung in dem Zeitpunkt aufgebaut wird, in dem eine Arbeitsphase der Antiblockiereinrichtung beginnt.

6. Kreis gemäß Anspruch 5, dadurch gekennzeichnet, daß der Druckregler (7) ein viertes Ventilmittel (41) aufweist, das in der Antiblockier-Phase einen Teil des von der Pumpe geförderten Fluids durch eine von diesem vierten Ventilmittel (41) gesteuerte Kammer (44) und eine diese Kammer mit dem veränderlichen Volumen (24) verbindende Leitung (22) zum Behälter (3) zurückführt.

7. Kreis gemäß Anspruch 6, dadurch gekennzeichnet, daß der Druckverlust $\Delta P2$ des dritten Ventilmittels (38) derart ist, daß:

$$\Delta P2 \geqq P3 - P2,$$

wobei P2 der Druck im Sekundärkreis und P3 der vom Druckregler auf einen Wert eingeregelte Druck ist, der etwas höher als der Druck P1 im Primärkreis ist.

8. Kreis gemäß einem der Ansprüche 5 bis 7, dadurch gekennzeichnet, daß der Druckregler außerdem einen Begrenzer (43) aufweist, um einer kleinen Menge des Bremsfluids ein Zurückfließen in den Hauptzylinder über den Primärkreis zu ermöglichen, derart, daß der Niederdrückungsgrad des mit dem Hauptzylinder verbundenen Pedals während der Antiblockierphasen begrenzt wird.

9. Kreis gemäß Anspruch 8, dadurch gekennzeichnet, daß parallel zum Begrenzer (43) ein Rückschlagventil (40) angeordnet ist, um mittels dieses Ventils einen Ausstoß der Pumpe in den Primärkreis zu verhindern.

10. Kreis gemäß einem der Ansprüche 5 bis 9, dadurch gekennzeichnet, daß das Ventilmittel (41) einer Druckvorrichtung (42) zugeordnet ist, die außerdem ein kleineres Ventil (52) trägt, die mit einigen Bar schwach austariert ist, um den Primärkreis beim Lösen der Bremsen über das Ventil (41) zu entleeren und folglich jeglichen Restdruck in den Kammern (44) des Reglers bzw. des veränderlichen Volumens zu unterdrücken.

11. Kreis gemäß einem der Ansprüche 5 bis 9, dadurch gekennzeichnet, daß das Ventil (41) einer Druckvorrichtung (42) zugeordnet ist, die einen Dichtungskragen (54) trägt, der so ausgerichtet ist, daß er die Entleerung des Primärkreises beim Lösen der Bremsen über das Ventil (41) zuläßt und folglich jeglichen Restdruck in den Kammern (44) des Reglers bzw. (33) des veränderlichen Volumens unterdrückt.

12. Kreis gemäß einem der vorangehenden Ansprüche, dadurch gekennzeichnet, daß er ein zum Begrenzerventil und zum dem Bremsmotor des vorderen Rades des Sekundärkreises zugeordneten Elektroventil parallel angeordnetes Vorsteuerventil (16), um den dem Hinterrad desselben Kreises zugeordneten Bremsmotor im Falle der Wirkung der Antiblockiereinrichtung auf eines der Vorderräder gegenüber dem Vorderrad und dem Hauptzylinder zu isolieren, und ein Ausgleichselement (62) für die Drücke in den Bremsmotoren der Hinterräder, das zwischen diesen Bremsmotoren eingebaut ist, aufweist.

13. Kreis gemäß Anspruch 12, dadurch gekennzeichnet, daß die Feder und das Vorsteuerventil (16) mit einem Wert austariert ist, der unterhalb demjenigen der Federn der Begrenzerventile (10, 10', 10''), die den jeweiligen Isolations-/Entlastungs-Elektroventilen (11, 11', 11'') zugeordnet ist, liegt.

14. Kreis gemäß einem der Ansprüche 12 und 13, dadurch gekennzeichnet, daß das Druck-Ausgleichselement (62) die Form eines Zylinders (64) annimmt, der durch einen von zwei gleich vorgespannten Federn (68) in der Mittelposition gehaltenen Kolben (70) in zwei im wesentlichen gleiche Volumina unterteilt wird, wobei jedes dieser zwei Volumina hydraulisch mit dem dem rechten bzw. dem linken Hinterrad zugeordneten Bremsmotor verbunden ist.

15. Kreis gemäß Anspruch 14, dadurch gekennzeichnet, daß der Kolben doppelt abgedichtet ist und dazwischen der Umgebungsluft ausgesetzt ist.